# EUROPÄISCHE PATENTSCHRIFT

(11) **EP 3 948 028 B1**
(45) Veröffentlichungstag und Bekanntmachung des Hinweises auf die Patenterteilung: **13.11.2024**
(21) Anmeldenummer: 20707181.2
(22) Anmeldetag: 21.02.2020
(51) Int. Cl.: F16H 57/04, H02K 9/06

(54) **GETRIEBE MIT LÜFTERANORDNUNG**
TRANSMISSION HAVING A FAN ASSEMBLY
TRANSMISSION COMPRENANT UN ENSEMBLE DE VENTILATEUR

(30) Priorität: 26.03.2019 DE 102019002168
(43) Veröffentlichungstag der Anmeldung: 09.02.2022
(73) Patentinhaber: SEW-EURODRIVE GmbH & Co. KG, 76646 Bruchsal (DE)
(72) Erfinder: KUNIK, Claus, 68753 Waghäusel (DE); VÖLKER, Konstantin, 76646 Bruchsal (DE); KNITTEL, Jan, 76706 Dettenheim (DE); BUNKA, Anette, 76344 Eggenstein-Leopoldshafen (DE)
(86) Internationale Anmeldenummer: PCT/EP2020/025084
(87) Internationale Veröffentlichungsnummer: WO 2020/192963

(56) Entgegenhaltungen:
- WO-A1-2017/216754
- CN-U- 203 394 862
- DE-A1- 102005 031 197
- DE-A1- 102008 010 912
- DE-A1- 102012 000 682
- DE-A1- 102013 005 430
- DE-T5- 112014 000 834

## Beschreibung

Die Erfindung betrifft ein Getriebe mit Lüfteranordnung.

Es ist allgemein bekannt, dass eine Lüfteranordnung zum Kühlen einer Vorrichtung verwendbar ist.

**Aus der** DE 10 2008 010 912 A1 **ist ein Lüfterrad und eine Lüfterhaube mit einstückig an der Lüfterhaube, also integriert, ausgebildetem Lüftergitter bekannt.**

Aus der DE 10 2005 031 197 A1 ist ein Antrieb bekannt.

Aus der DE 11 2014 000 834 T5 ist eine Kraftübertragungsvorrichtung bekannt.

Aus der DE 10 2008 017 755 A1 ist eine Kühlanordnung für ein Getriebe bekannt.

**Aus der** CN 203 394 862 U **sind als nächstliegender Stand der Technik Gitterteile für ein Getriebe bekannt.**

**Aus der** DE 10 2012 000682 A1 **ist eine Lüfteranordnung bekannt.**

**Aus der** DE 11 2014 000834 T5 **ist eine Kraftübertragungsvorrichtung bekannt.**

**Aus der** DE 10 2008 010 912 A1 **ist ein Lüfterrad bekannt.**

**Aus der** DE 10 2013 005430 A1 **ist ein Getriebe mit einer Welle bekannt.**

**Aus der** DE 10 2005 031197 A1 **ist ein Antrieb bekannt.**

**Aus der** WO 2017/216754 A1 **ist ein Getriebemotor bekannt.**

Der Erfindung liegt daher die Aufgabe zugrunde, ein Getriebe mit Lüfteranordnung weiterzubilden, wobei eine einfache und kostengünstige Herstellung erreichbar sein soll.

Erfindungsgemäß wird die Aufgabe bei dem Getriebe nach den in Anspruch 1 angegebenen Merkmalen gelöst.

Wichtige Merkmale der Erfindung bei dem Getriebe mit Lüfteranordnung sind, dass die Lüfteranordnung ein Lüfterrad, eine Haube und ein Gitter aufweist,
wobei das Lüfterrad drehfest mit der eintreibenden Welle des Getriebes verbunden ist,
wobei die Lüfterhaube an einem insbesondere mehrstückig ausgeführten Halterahmen befestigt ist, der am Gehäuse des Getriebes befestigt ist,
wobei das Gitter aus zwei Gitterteilen gebildet ist
wobei die Haube aus zwei Haubenteilen gebildet ist
wobei jedes Gitterteil mit jedem der beiden Haubenteile verbunden, insbesondere mittels Schrauben verbunden, ist, insbesondere also das erste Gitterteil sowohl mit dem ersten als auch mit dem zweiten Haubenteil verbunden ist und das zweite Gitterteil sowohl mit dem ersten als auch mit dem zweiten Haubenteil verbunden ist,

insbesondere wobei der vom ersten Gitterteil in Umfangsrichtung überdeckte Umfangswinkelbereich angrenzt, insbesondere aber nicht überlappend angrenzt, an den vom zweiten Gitterteil in Umfangsrichtung überdeckten Umfangswinkelbereich und wobei der vom ersten Haubenteil in Umfangsrichtung überdeckte Umfangswinkelbereich angrenzt, insbesondere aber nicht überlappend angrenzt, an den vom zweiten Haubenteil in Umfangsrichtung überdeckten Umfangswinkelbereich, insbesondere wobei der vom ersten Gitterteil in Umfangsrichtung überdeckte Umfangswinkelbereich überlappt mit dem vom ersten Haubenteil überdeckten Umfangswinkelbereich.

Von Vorteil ist dabei, dass die Stabilität der Lüfterhaube mittels der als Verbindungsmittel fungierenden Gitterteile erhöht ist. Somit sind auch Resonanzschwingungen der Lüfterhaube unterdrückt. Nachteilig ist allerdings die aufwendige Montage.

Erfindungsgemäß ist das Gitter aus zwei Gitterteilen gebildet, deren erste Trennlinie eine gerade Strecke ist oder aus zwei, in Flucht zueinander liegenden geraden Strecken gebildet ist,
wobei die Haube aus zwei Haubenteilen gebildet ist, deren zweite Trennlinie eine ebene, aus geraden Streckenabschnitten zusammengesetzte Kurve ist.

Von Vorteil ist dabei, dass eine einfache Herstellung ermöglicht ist. Denn die Gitterteile sind viel kleiner als ein einstückig ausgeführtes Gitter. Ebenso sind die Haubenteile einfach aus einem Blech fertigbar, indem gestanzt und gebogen wird.

Durch die nicht parallele Ausrichtung der beiden Trennlinien zueinander ist eine erhöhte Stabilität insbesondere gegen mechanische Schwingungen erreichbar.

Erfindungsgemäß sind die Gitterteile an ihrem jeweiligen Außenumfang jeweils derart polygonal ausgeformt sind, dass die Berührfläche zwischen dem jeweiligen Gitterteil und dem jeweiligen Haubenteil jeweils aus ebenen Flächenstücken zusammengesetzt ist. Von Vorteil ist dabei, dass eine stabile Verbindung der Gitterteile mit den Haubenteilen mittels Schrauben herstellbar ist und Resonanzschwingungen unterdrückbar sind.

Erfindungsgemäß spannen die erste Trennlinie und die Drehachse der eintreibenden Welle eine erste Ebene auf,
wobei die zweite Trennlinie und die Drehachse der eintreibenden Welle eine zweite Ebene aufspannen,
wobei die zweite Ebene zur ersten Ebene senkrecht ausgerichtet ist oder zumindest einen Winkel zwischen 30° und 90° aufweist. Von Vorteil ist dabei, dass eine erhöhte Stabilität erreichbar ist und somit Schwingungen unterdrückbar sind.

Bei einer vorteilhaften Ausgestaltung ist die aus den beiden Haubenteilen gebildete Haube derart geformt, dass die Haube eine axial durchgehende Ausnehmung aufweist, insbesondere die bezogen auf die eintreibende Welle mittig angeordnet ist. Von Vorteil ist dabei, dass die Haubenteile jeweils nur geringe Masse aufweisen und als Lüfterhaubengitter die beiden Gitterteile verwendbar sind. Somit sind sowohl die Haubenteile also auch die Gitterteile jeweils als Stanz-Biegeteil herstellbar, wobei eine effiziente Ausnutzung des Blechs beim Ausstanzen erreichbar ist.

Bei einer vorteilhaften Ausgestaltung ist an den aus Blech als Stanz-Biegeteile hergestellten Haubenteilen ein jeweiliger, in die Ausnehmung hineinragender Laschenbereich ausgebildet, an welchem das erste oder das zweite Gitterteil befestigt ist, insbesondere mittels Schrauben befestigt ist. Von Vorteil ist dabei, dass eine einfache sichere Befestigung für die Gitterteile erreichbar ist.

Bei einer vorteilhaften Ausgestaltung ist an den aus Blech als Stanz-Biegeteile hergestellten Haubenteilen ein jeweiliger, in die Ausnehmung hineinragender Laschenbereich ausgebildet, an welchem das erste oder das zweite Gitterteil befestigt ist, insbesondere mittels Schrauben befestigt ist,

insbesondere wobei am jeweiligen Laschenbereich Schraubmuttern angeschweißt sind zur Bereitstellung von Gewindebohrungen für die Schrauben. Von Vorteil ist dabei, dass das Haubenteil einfach und kostengünstig bereitstellbar ist und die Gitterteile nur angeschraubt werden müssen.

Bei einer alternativen vorteilhaften Ausgestaltung ragt an den aus Blech als Stanz-Biegeteile hergestellten Haubenteilen ein jeweiliger, an der Innenseite des jeweiligen Haubenteils angeschweißtes Rahmenteil in die Ausnehmung hinein, an welchem das erste oder das zweite Gitterteil befestigt ist, insbesondere mittels Schrauben befestigt ist, insbesondere wobei am Rahmenteil Schraubmuttern angeschweißt sind zur Bereitstellung von Gewindebohrungen für die Schrauben. Von Vorteil ist dabei, dass die Haubenteile durch das strebenartige Rahmenteil versteift sind und somit schlagfest sind.

Bei einer vorteilhaften Ausgestaltung bedeckt die Ausnehmung insbesondere vollständig von dem Gitter, insbesondere von den beiden Gitterteilen,
insbesondere so, dass der axial eintretende Luftstrom durch das Gitter hindurchtritt. Von Vorteil ist dabei, dass die Gitteröffnungen des Gitters derart klein sind, dass ein Schutz gegen Durchgreifen einer menschlichen Hand vorgesehen ist.

Bei einer vorteilhaften Ausgestaltung berühren die beiden Gitterteile sich entlang der ersten Trennlinie oder weisen einen Abstand von weniger als 5 mm zueinander auf.

Bei einer vorteilhaften Ausgestaltung berühren sich die beiden Haubenteile entlang der zweiten Trennlinie berühren oder weisen einen Abstand von weniger als 5 mm zueinander auf. Von Vorteil ist dabei, dass entlang der Trennlinien entweder Berührung oder alternativ nur ein sehr kleiner Abstand vorhanden ist, welcher ein Durchgreifen mit einer menschlichen Hand verhindert.

Bei einer vorteilhaften Ausgestaltung tritt der vom Lüfterrad geforderte Luftstrom zwischen dem Gehäuse des Getriebes und der Haube aus, insbesondere derart gerichtet, dass er dem Gehäuse des Getriebes entlang strömt. Von Vorteil ist dabei, dass das Getriebe möglichst effektiv und gleichverteilt gekühlt wird.

Bei einer vorteilhaften Ausgestaltung weist die Haube eine in Umfangsrichtung unregelmäßig polygonal geformte Stirnseite auf,
insbesondere der radial äußere Umfang der Stirnseite der Haube unregelmäßig polygonal geformt ist. Von Vorteil ist dabei, dass zwar ein kreisrunder Lüfter verwendet wird für ein quaderförmiges Getriebe, aber trotzdem der Luftstrom möglichst gleichmäßig am Umfang verteilt am Getriebe entlang strömt.

Bei einer vorteilhaften Ausgestaltung sind die Haubenteile und/oder die Gitterteile jeweils als Stanz-Biegeteile gefertigt. Von Vorteil ist dabei, dass eine einfache kostengünstige Herstellung ermöglicht ist.

Bei einer vorteilhaften Ausgestaltung ist an jedem Haubenteil, insbesondere an der Innenwand jedes Haubenteils, ein Eingriffschutz befestigt, welcher zwischen Habenteil und Gehäuse des Getriebes angeordnet ist,
wobei der Eingriffschutz durchgehende Gitteröffnungen aufweist,
insbesondere und von der vom Lüfterrad geförderten Luftstrom durchströmt wird. Von Vorteil ist dabei, dass auch ein Eingreifen entgegen der Strömungsrichtung des vom Lüfterrad geförderten Luftstroms verhinderbar ist. Außerdem ist der Eingreifschutz an der Innenwandung des Haubenteils angebracht. Somit ist eine direkte Verbindung mit dem Getriebe nicht notwendig.

Bei einer vorteilhaften Ausgestaltung weist jedes Haubenteil radial durchgehende Ausnehmungen auf, welche als Schlitz, Langloch oder Ellipse ausgeformt sind, wobei die jeweils längste Ausdehnung der jeweiligen Ausnehmung in axialer Richtung ausgerichtet ist. Von Vorteil ist dabei, dass Luft radial einströmen kann, insbesondere, wenn axiales Einströmen durch nahe an den Gitterteilen angeordnete Gegenstände oder Vorrichtungen erschwert oder verhindert ist. Somit ist außerdem ein Berührschutz gegen das Berühren von drehenden Teilen bewirkt.

Bei einer vorteilhaften Ausgestaltung weist jedes Gitterteil ein gleichmäßiges und/oder regelmäßiges ebenes Gitter von durch das jeweilige Gitterteil axial durchgehenden, insbesondere sechseckförmigen Ausnehmungen, insbesondere Gitteröffnungen, auf. Von Vorteil ist dabei, dass ein möglichst großer Luftstrom mit möglichst geringem Luftwiderstand axial einströmbar ist. Vorzugswiese ist der vom jeweiligen Gitterteil dabei erzeugte Strömungswiderstand gering. Trotzdem ist ein Berührschutz gegen das Berühren von drehenden Teilen erreicht.

Weitere Vorteile ergeben sich aus den Unteransprüchen. Weitere Merkmalskombinationen können vorgenommen werden, ohne vom Schutzumfang der Ansprüchen abzuweichen.

Die Erfindung wird nun anhand von schematischen Abbildungen näher erläutert:

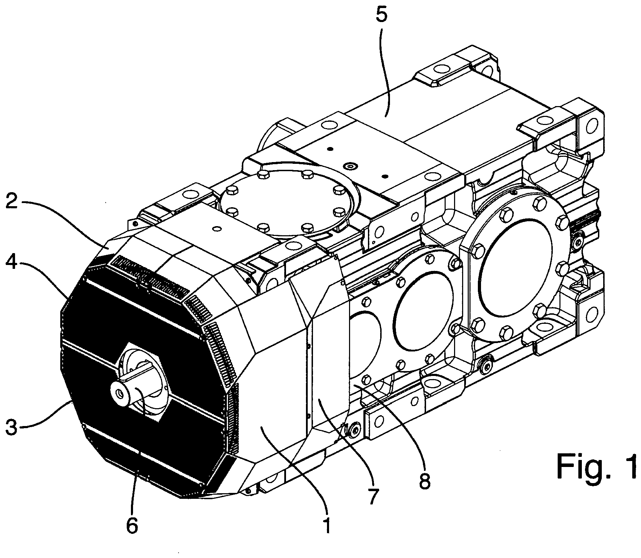

In der Figur 1 ist ein erfindungsgemäßes Getriebe mit eintriebsseitig angeordnetem Lüfter in Schrägansicht dargestellt.

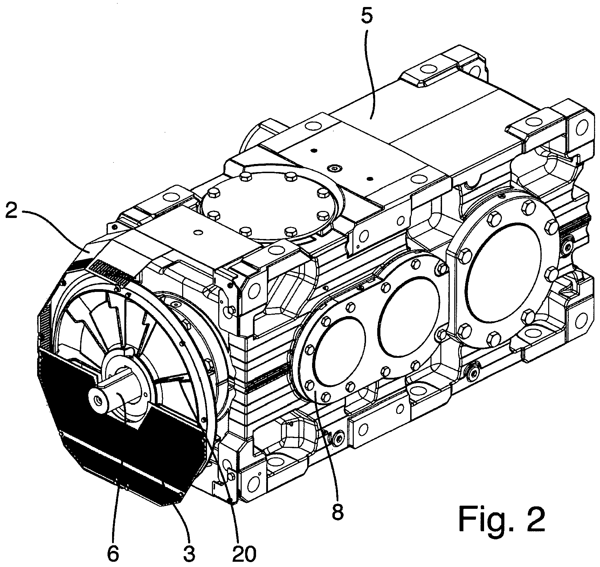

In der Figur 2 ist im Unterschied zu Figur 1 ein erstes Haubenteil 1 und ein zweites Gitterteil 4 ausgeblendet

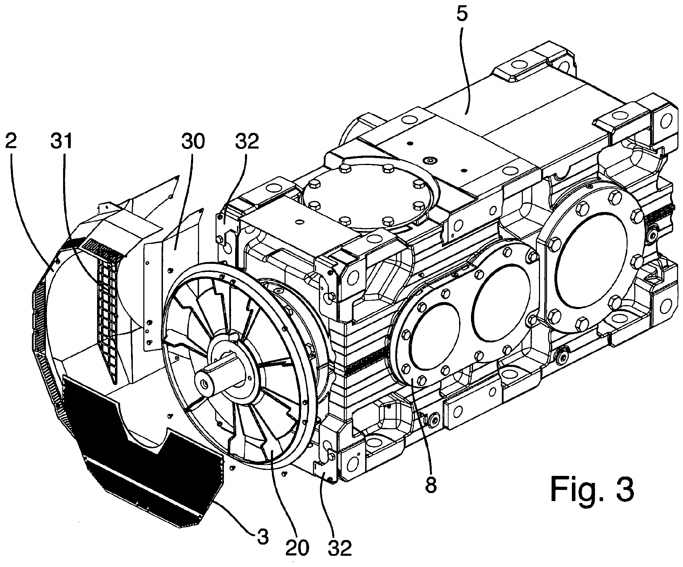

In der Figur 3 sind im Unterschied zu Figur 2 die außerhalb des Gehäuses 5 des Getriebes angeordneten Komponenten des Lüfters explodiert dargestellt.

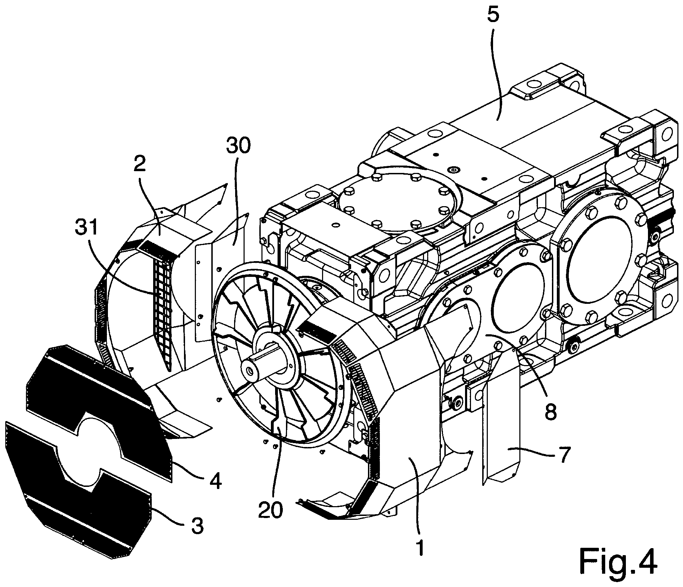

In der Figur 4 sind im Unterschied zu Figur 1 die außerhalb des Gehäuses 5 des Getriebes angeordneten Komponenten des Lüfters explodiert dargestellt.

Wie in den Figuren dargestellt, weist das Getriebe eine eintreibende Welle 6 auf, welche mittels Lagern drehbar gelagert ist in einem Gehäuse 5 des Getriebes.

Ein Lüfterrad 20 ist drehfest mit der eintreibenden Welle 6 des Getriebes verbunden und von einer Haubenanordnung umgeben, die an einem Halterahmen 32 am Gehäuse 5 des Getriebes befestigt ist. Der Halterahmen 32 ist mehrstückig ausgeführt und mittels Befestigungsschrauben mit dem Gehäuse 5 befestigt.

Die Haubenanordnung weist ein erstes Haubenteil 1 und ein zweites Haubenteil 2 auf, welche beide am Halterahmen 32 mittels Schrauben angeschraubt sind.

Dabei überdeckt jedes der beiden Haubenteile (1, 2) jeweils einen Umfangswinkel von 180° bezogen auf die Drehachse der eintreibenden Welle 6. Die Trennlinie zwischen den beiden Haubenteilen (1, 2) verläuft in dem in den Figuren gezeigten Ausführungsbeispiel vertikal.

Die beiden Haubenteile (1, 2) bilden somit eine Lüfterhaube, welche den vom Lüfterrad 20 geförderten Luftstrom führt, so, dass er dem Gehäuse 5 entlang aus der Lüfterhaube 20 ausströmt. Das Gehäuse des Getriebes ist grob gesehen quaderförmig. Da das Lüfterrad 20 aber rund ist, weist die aus den zwei, einander möglichst berührend oder zumindest sehr eng aneinander angeordneten Haubenteilen (1, 2) gebildete Lüfterhaube einen polygonalen Umfang auf. Somit ist der zwischen Lüfterhaube und Gehäuse 5 ausströmende Luftstrom möglichst wenig abhängig vom Umfangswinkel. Anders ausgedrückt ist der Lüfterhaube austretende Luftstrom möglichst gleichmäßig über die Umfangsrichtungen verteilt. Hierdurch ist eine optimale Kühlwirkung erzielbar.

Jedes Haubenteil 1, 2 weist an seinem Umfang einen mit Ausnehmungen versehenen und somit luftdurchlässigen Bereich auf, welcher einen Luftstrom aus radialer Richtung kommend in die Lüfterhaube eintreten lässt.

Dabei bezieht sich die radiale Richtung auf die Drehachse der eintreibenden Welle.

Die aus den beiden Haubenteilen (1, 2) gebildete Haube ist derart geformt, dass die Haube eine axial durchgehende Ausnehmung aufweist, die mittig angeordnet ist. Außerdem sind an den aus Blech als Stanz-Biegeteile hergestellten Haubenteilen (1, 2) in die Ausnehmung hineinragende Laschenbereiche ausgebildet, an welchen ein erstes oder ein zweites Gitterteil (3, 4) befestigt, insbesondere mittels Schrauben befestigt sind.

Somit ist die Ausnehmung vollständig von den Gitterteilen 3 und 4 bedeckt. Der axial eintretende Luftstrom tritt durch dieses so gebildete Lüftergitter hindurch.

Zur Bereitstellung einer Gewindebohrung für Schrauben, welche die Gitterteile (3, 4) mit den Laschenbereichen der Haubenteile (1, 2) verbinden, werden Schraubmuttern an die Laschenbereiche angeschweißt. Somit sind die Gitterteile (3, 4) dann anschraubbar mittels der durch eine Ausnehmung des jeweiligen Laschenbereichs axial durchgehenden und in die Schraubmuttern eingeschraubten Schrauben, deren Schraubköpfe das jeweilige Gitterteil gegen den jeweiligen Laschenbereich drücken.

Die beiden Gitterteile 3 und 4 berühren sich entlang einer geraden Strecke oder weisen entlang einer geraden Strecke einen Abstand von weniger als 5 mm auf. Diese Strecke wird hier auch als erste Trennlinie bezeichnet.

Die erste Trennlinie und die Drehachse der eintreibenden Welle spannen eine erste Ebene auf.

Das erste Haubenteil 1 berührt das zweite Haubenteil 2 entlang einer ebenen Kurve oder weist entlang einer ebenen Kurve einen Abstand von weniger als 5 mm auf. Diese ebene Kurve wird hier auch als zweite Trennlinie bezeichnet.

Die zweite Trennlinie ist aus geraden Streckenabschnitten zusammengesetzt.

Die zweite Trennlinie und die Drehachse der eintreibenden Welle spannen eine zweite Ebene auf.

Die zweite Ebene ist nicht parallel zur ersten Ebene, sondern senkrecht ausgerichtet oder weist zumindest einen Winkel zwischen 30° und 90° auf.

Somit ist eine erhöhte Stabilität erreicht, denn die Haubenteile (1, 2) sowie die Gitterteile (3, 4) sind als Stanz-Biegeteile aus Blech gefertigt. Durch den Winkel ist somit das Risiko einer eine Resonanzschwingung vermindert oder verhindert.

Die Gitterteile (3, 4) weisen jeweils ein vorzugsweise regelmäßiges Gitter von durchgehenden Ausnehmungen auf. Somit kann ein Luftstrom axial durchtreten und zum Lüfter gesogen werden.

An der Innenseite des ersten Haubenteils 1 ist ein Eingriffschutz 31 angeordnet, durch welchen der vom Lüfter geförderte Luftstrom hindurch austritt und vom ersten Haubenteil 1 derart gerichtet ausströmt, dass er an der Außenseite des Getriebes entlangströmt.

Außerdem weist das erste Haubenteil 1 eine halbkreisförmige Aussparung auf, so dass ein entsprechend kreisförmiger Lagerdeckelabschnitt einen genügend großen Abstand zum Haubenteil 1 aufweist, so dass die vom Lüfter geförderte Luft möglichst gleichmäßig am Umfang der Lüfterhaube austritt und somit das Gehäuse 5 gleichmäßig gekühlt ist.

An der Innenseite des zweiten Haubenteils 2 ist ebenfalls ein Eingriffschutz 31 befestigbar, durch welchen der vom Lüfter geförderte Luftstrom hindurch austritt und vom zweiten Haubenteil 2 derart gerichtet ausströmt, dass er an der Außenseite des Getriebes entlangströmt.

Außerdem weist das zweite Haubenteil 2 eine halbkreisförmige Aussparung auf, so dass ein entsprechend kreisförmiger Lagerdeckelabschnitt einen genügend großen Abstand zum zweiten Haubenteil 2 aufweist, so dass die vom Lüfter geförderte Luft möglichst gleichmäßig am Umfang der Lüfterhaube austritt und somit das Gehäuse 5 gleichmäßig gekühlt ist.

Die Lüfterhaube ist aber auch bei einem anderen Getriebe anbringbar, bei welchem der runde Lagerdeckelabschnitt nicht vorhanden ist oder weiter entfernt angeordnet ist. In diesem Fall wird die Aussparung am ersten Haubenteil 1 durch ein Anbringen eines Deckteils 30 verschlossen und somit der Luftstrom besser und gleichmäßiger am Gehäuse 5 entlang geleitet. Ebenso wird In diesem Fall die Aussparung am zweiten Haubenteil 1 durch ein Anbringen eines weiteren Deckteils 30 verschlossen und somit der Luftstrom besser und gleichmäßiger am Gehäuse 5 entlang geleitet.

Wenn eine Kupplung oder ein Elektromotor mit der eintreibenden Welle verbunden und derart axial nahe an der Lüfterhaube angeordnet ist, dass axial, also durch die Gitterteile 3 und 4, keine Luft strömen kann, ist es aber ermöglicht, dass radial durch die Haubenteile 1 und 2 Luft zum Lüfter hinströmen kann.

Somit ist durch die Ausnehmungen des jeweiligen luftdurchlässigen Bereichs der Haubenteile (1, 2) und durch die Gitterteile (3, 4) ein Einströmen des vom Lüfterrad angesaugten Luftstroms aus radialer und axialer Richtung ermöglicht.

Durch die als unregelmäßiges Polygon geformte Stirnseite der Lüfterhaube ist nicht nur eine gleichmäßige Verteilung des Luftstroms in Umfangsrichtung, sondern auch eine einfache Fertigung der zweigeteilten Lüfterhaube als Stanz-Biegeteile ermöglicht. Die Unterseite des Getriebes fungiert als Fußfläche oder Standfläche und wird nicht vom Luftstrom durchströmt.

Die Ausnehmungen des luftdurchlässigen Bereichs an den Gitterteilen 3 und 4 sind jeweils als Sechseck ausgeführt und gleichmäßig voneinander beabstandet. Somit weist der luftdurchlässige Bereich ein ebenes regelmäßiges Gitter von als Sechsecken ausgeführten, axial durch das jeweilige Gitterteil (3, 4) durchgehende Ausnehmungen auf. Somit ist eine optimierte Ausnutzung der Gitterfläche ermöglicht, insbesondere also eine hohe Stabilität beibehaltbar trotz möglichst viel Luftdurchlass.

Die Haubenteile 1 und 2 weisen hingegen radial durchgehende, als Schlitz, Langloch oder Ellipse geformte Ausnehmungen auf, deren längste Ausdehnung in axialer Richtung ausgerichtet ist. Da die Ausnehmungen im den Gitterteilen (3, 4) jeweils zugewandten Randbereich der Haubenteile (1, 2) angeordnet sind, ist durch diese längliche Ausformung ein geringer Strömungswiderstand für radial einströmende Luft bewirkt und eine ausreichende Stabilität zur Aufnahme und zum Tragen der Gitterteile (3, 4) mittels der Haubenteile (1, 2).

Bei der elliptischen Ausführung ist die Hauptachse der jeweiligen Ellipse in axialer Richtung ausgerichtet.

Bei weiteren erfindungsgemäßen Ausführungsbeispielen wird statt der Zweiteilung der Lüfterhaube eine Mehrfachteilung ausgeführt.

Bei weiteren erfindungsgemäßen Ausführungsbeispielen werden keine Laschenbereiche an der Innenseite der Haubenteile (1, 2) ausgebildet, sondern an jedes der Haubenteile (1, 2) jeweils ein polygonal geformtes Rahmenteil angeschweißt. Das jeweilige Rahmenteil ist eben ausgeführt, wobei die Normalenrichtung der das Rahmenteil aufnehmenden Ebene in axialer Richtung ausgerichtet ist. Dadurch ist das jeweilige Haubenteil (1, 2) stabilisiert. Zur Bereitstellung einer Gewindebohrung für Schrauben, welche die Gitterteile (3, 4) mit den Haubenteilen (1, 2) verbinden, werden Schraubmuttern an die Rahmenteile angeschweißt. Somit sind die Gitterteile (3, 4) dann anschraubbar mittels der durch eine Ausnehmung des jeweiligen Rahmenteils axial durchgehenden und in die Schraubmuttern eingeschraubten Schrauben, deren Schraubköpfe das jeweilige Gitterteil gegen das jeweilige Rahmenteil drücken.

### Bezugszeichenliste

1 erstes Haubenteil
2 zweites Haubenteil
3 erstes Gitterteil
4 zweites Gitterteil
5 Gehäuse
6 eintreibende Welle
7 Deckteil
8 Lagerdeckel
20 Lüfterrad
30 Deckteil
31 Eingriffschutz
32 Halterahmen

## Patentansprüche

1. Getriebe mit Lüfteranordnung,
wobei die Lüfteranordnung ein Lüfterrad (20), eine Haube und ein Gitter aufweist,
wobei das Lüfterrad (20) drehfest mit der eintreibenden Welle (6) des Getriebes verbunden ist,
**wobei** die Lüfterhaube an einem Halterahmen (32) befestigt ist, der am Gehäuse (5) des Getriebes befestigt ist,
wobei das Gitter aus zwei Gitterteilen (3, 4) gebildet ist
wobei die Haube aus zwei Haubenteilen gebildet ist
wobei jedes Gitterteil (3, 4) mit jedem der beiden Haubenteile (1, 2) verbunden ist,
**dadurch gekennzeichnet,**
- **dass die Gitterteile (3, 4) jeweils derart polygonal ausgeformt sind, dass die Berührfläche zwischen dem jeweiligen Gitterteil (3, 4) und dem jeweiligen Haubenteil (1, 2) jeweils aus ebenen Flächenstücken zusammengesetzt ist,**
- **oder dass zwischen den beiden Gitterteilen (3, 4) eine erste Trennlinie als eine gerade Strecke ausgebildet ist oder als zwei, in Flucht zueinander liegenden geraden Strecken gebildet ist,**
**wobei zwischen den beiden Haubenteilen eine zweite Trennlinie als eine ebene, aus geraden Streckenabschnitten zusammengesetzte Kurve ausgebildet ist,**
**wobei die erste Trennlinie und die Drehachse der eintreibenden** Welle (6) eine **erste Ebene aufspannen,**
**wobei die zweite Trennlinie und die Drehachse der eintreibenden** Welle (6) eine **zweite Ebene aufspannen,**
**wobei die zweite Ebene zur ersten Ebene senkrecht ausgerichtet ist oder zumindest einen Winkel zwischen 30° und 90° aufweist.**

2. **Getriebe nach Anspruch 1,**
**dadurch gekennzeichnet, dass**
die aus den beiden Haubenteilen (1, 2) gebildete Haube derart geformt ist, dass die Haube eine axial durchgehende Ausnehmung aufweist, insbesondere die bezogen auf die eintreibende Welle (6) mittig angeordnet ist.

3. **Getriebe nach Anspruch 2,**
**dadurch gekennzeichnet, dass**
an den aus Blech als Stanz-Biegeteile hergestellten Haubenteilen (1, 2) ein jeweiliger, in die Ausnehmung hineinragender Laschenbereich ausgebildet ist, an welchem das erste oder das zweite Gitterteil (3, 4) befestigt ist, insbesondere mittels Schrauben befestigt ist,
insbesondere wobei am jeweiligen Laschenbereich Schraubmuttern angeschweißt sind zur Bereitstellung von Gewindebohrungen für die Schrauben.

4. **Getriebe nach Anspruch 2 oder 3,**
**dadurch gekennzeichnet, dass**
an den aus Blech als Stanz-Biegeteile hergestellten Haubenteilen (1, 2) ein jeweiliger, an der Innenseite des jeweiligen Haubenteils (1, 2) angeschweißtes Rahmenteil in die Ausnehmung hineinragt, an welchem das erste oder das zweite Gitterteil (3, 4) befestigt ist, insbesondere mittels Schrauben befestigt ist,
insbesondere wobei am Rahmenteil Schraubmuttern angeschweißt sind zur Bereitstellung von Gewindebohrungen für die Schrauben.

5. **Getriebe nach einem der Ansprüche 2 bis 4,**
**dadurch gekennzeichnet, dass**
die Ausnehmung **radial** von dem Gitter, insbesondere von den beiden Gitterteilen (3, 4), bedeckt ist,
insbesondere so, dass der axial eintretende Luftstrom durch das Gitter hindurchtritt.

6. Getriebe nach einem der vorangegangenen Ansprüche,
**dadurch gekennzeichnet, dass**
die beiden Gitterteile (3, 4) sich entlang der ersten Trennlinie berühren oder einen Abstand von weniger als 5 mm zueinander aufweisen.

7. Getriebe nach einem der vorangegangenen Ansprüche,
**dadurch gekennzeichnet, dass**
die beiden Haubenteile (1, 2) sich entlang der zweiten Trennlinie berühren oder einen Abstand von weniger als 5 mm zueinander aufweisen.

8. Getriebe nach einem der vorangegangenen Ansprüche,
**dadurch gekennzeichnet, dass**
der vom Lüfterrad (20) geforderte Luftstrom zwischen dem Gehäuse (5) des Getriebes und der Haube austritt, insbesondere derart gerichtet, dass er dem Gehäuse (5) des Getriebes entlang strömt.

9. Getriebe nach einem der vorangegangenen Ansprüche,
**dadurch gekennzeichnet, dass**
die Haube eine in Umfangsrichtung unregelmäßig polygonal geformte Stirnseite aufweist, insbesondere der radial äußere Umfang der Stirnseite der Haube unregelmäßig polygonal geformt ist.

10. Getriebe nach Anspruch 1,
**dadurch gekennzeichnet, dass**
die Haubenteile (1, 2) und/oder die Gitterteile (3, 4) jeweils als Stanz-Biegeteile gefertigt sind.

11. Getriebe nach einem der vorangegangenen Ansprüche,
**dadurch gekennzeichnet, dass**
an jedem Haubenteil (1, 2), insbesondere an der Innenwand jedes Haubenteils (1, 2), ein Eingriffschutz (31) befestigt ist, welcher zwischen Habenteil und Gehäuse (5) des Getriebes angeordnet ist,
wobei der Eingriffschutz (31) durchgehende Gitteröffnungen aufweist.

12. Getriebe nach einem der vorangegangenen Ansprüche,
**dadurch gekennzeichnet, dass**
jedes Haubenteil (1, 2) radial durchgehende Ausnehmungen aufweist, welche als Schlitz, Langloch oder Ellipse ausgeformt sind, wobei die jeweils längste Ausdehnung der jeweiligen Ausnehmung in axialer Richtung ausgerichtet ist.

13. Getriebe nach einem der vorangegangenen Ansprüche,
**dadurch gekennzeichnet, dass**
jedes Gitterteil (3, 4) ein gleichmäßiges und/oder regelmäßiges ebenes Gitter von durch das jeweilige Gitterteil (3, 4) axial durchgehenden, insbesondere sechseckförmigen Ausnehmungen, insbesondere Gitteröffnungen, aufweist.

## Claims

1. A gear unit with fan assembly,
wherein the fan assembly has a fan impeller (20), a cowl and a grille,
wherein the fan impeller (20) is connected non-rotatably to the input shaft (6) of the gear unit,
wherein the fan cowl is fastened to a holding frame (32) which is fastened to the housing (5) of the gear unit,
wherein the grille is formed of two grille parts (3, 4),
wherein the cowl is formed of two cowl parts,
wherein each grille part (3, 4) is connected to each of the two cowl parts (1, 2),
**characterised in that**
- the grille parts (3, 4) are each formed as a polygon such that the contacting face between the respective grille part (3, 4) and the respective cowl part (1, 2) in each case is composed of planar face pieces,
- or **in that** between the two grille parts (3, 4) a first parting line is formed as a straight section or as two straight sections which lie flush with each other,
with between the two cowl parts a second parting line being formed as a plane curve composed of straight section portions,
with the first parting line and the axis of rotation of the input shaft (6) spanning a first plane,
with the second parting line and the axis of rotation of the input shaft (6) spanning a second plane,
with the second plane being oriented perpendicularly or at least being at an angle of between 30° and 90° to the first plane.

2. A gear unit according to claim 1,
**characterised in that**
the cowl which is formed of the two cowl parts (1, 2) is shaped such that the cowl has an axially continuous recess, in particular which is arranged centrally relative to the input shaft (6).

3. A gear unit according to claim 2,
**characterised in that**
on the cowl parts (1, 2) which are produced as stamped and bent parts from metal sheet there is formed a respective tab region which protrudes into the recess, to which tab region the first or the second grille part (3, 4) is fastened, in particular is fastened by means of screws,
in particular with screw nuts being welded to the respective tab region to provide threaded bores for the screws.

4. A gear unit according to claim 2 or 3,
**characterised in that**
on the cowl parts (1, 2) which are produced as stamped and bent parts from metal sheet a respective frame part welded to the inside of the respective cowl part (1, 2) protrudes into the recess, to which frame part the first or the second grille part (3, 4) is fastened, in particular is fastened by means of screws,
in particular with screw nuts being welded to the frame part to provide threaded bores for the screws.

5. A gear unit according to one of claims 2 to 4,
**characterised in that**
the recess is radially covered by the grille, in particular by the two grille parts (3, 4),
in particular such that the axially entering air flow passes through the grille.

6. A gear unit according to one of the preceding claims,
**characterised in that**
the two grille parts (3, 4) contact each other along the first parting line or are at a distance of less than 5 mm from each other.

7. A gear unit according to one of the preceding claims,
**characterised in that**
the two cowl parts (1, 2) contact each other along the second parting line or are at a distance of less than 5 mm from each other.

8. A gear unit according to one of the preceding claims,
**characterised in that**
the air flow conveyed by the fan impeller (20) emerges between the housing (5) of the gear unit and the cowl, in particular directed such that it flows along the housing (5) of the gear unit.

9. A gear unit according to one of the preceding claims,
**characterised in that**
the cowl has an end face shaped as an irregular polygon in the circumferential direction, in particular the radially outer periphery of the end face of the cowl is shaped as an irregular polygon.

10. A gear unit according to claim 1,
**characterised in that**
the cowl parts (1, 2) and/or the grille parts (3, 4) are each manufactured as stamped and bent parts.

11. A gear unit according to one of the preceding claims,
**characterised in that**
to each cowl part (1, 2), in particular to the inner wall of each cowl part (1, 2), there is fastened a protective guard (31) which is arranged between the cowl part and the housing (5) of the gear unit,
wherein the protective guard (31) has continuous grille openings.

12. A gear unit according to one of the preceding claims,
**characterised in that**
each cowl part (1, 2) has radially continuous recesses which are formed as slots, elongate holes or ellipses, with the longest extent of the respective recess in each case being oriented in the axial direction.

13. A gear unit according to one of the preceding claims,
**characterised in that**
each grille part (3, 4) has a uniform and/or regular planar grille of in particular hexagonal recesses, in particular grille openings, which pass axially through the respective grille part (3, 4).

## Revendications

1. Transmission comprenant un ensemble formant ventilateur,
dans laquelle l'ensemble formant ventilateur comprend une roue de ventilateur (20), un capot et une grille,
dans laquelle la roue de ventilateur (20) est reliée de manière solidaire en rotation à l'arbre d'entraînement (6) de la transmission,
dans laquelle le capot de ventilateur est fixé à un cadre de support (32) qui est fixé au carter (5) de la transmission,
dans laquelle la grille est formée de deux parties de grille (3, 4),
dans laquelle le capot est formé de deux parties de capot,
dans laquelle chaque partie de grille (3, 4) est reliée à chacune des deux parties de capot (1, 2),
**caractérisée en ce que**
- les parties de grille (3, 4) sont respectivement formées de manière polygonale de telle manière que la surface de contact entre la partie de grille (3, 4) respective et la partie de capot (1, 2) respective est composée respectivement de pièces de surface planes,
- ou une première ligne de séparation est formée entre les deux parties de grille (3, 4) sous la forme d'une ligne droite ou sous la forme de deux lignes droites alignées l'une par rapport à l'autre,
dans laquelle une deuxième ligne de séparation est formée entre les deux parties de capot sous la forme d'une courbe plane composée de sections de ligne droite, dans laquelle la première ligne de séparation et l'axe de rotation de l'arbre d'entraînement (6) s'étendent dans un premier plan,
dans laquelle la deuxième ligne de séparation et l'axe de rotation de l'arbre d'entraînement (6) s'étendent dans un deuxième plan,
dans laquelle le deuxième plan est orienté perpendiculairement au premier plan ou présente au moins un angle compris entre 30° et 90°.

2. Transmission selon la revendication 1,
**caractérisée en ce que**
le capot réalisé à partir des deux parties de capot (1, 2) est formé de telle manière que le capot présente un évidement axialement traversant, en particulier agencé au centre par rapport à l'arbre d'entraînement (6).

3. Transmission selon la revendication 2,
**caractérisée en ce que**
une région respective formant patte, faisant saillie dans l'évidement et à laquelle la première ou la deuxième partie de grille (3, 4) est fixée, en particulier au moyen de vis, est formée au niveau des parties de capot (1, 2) fabriquées en tôle sous forme de pièces pliées estampées,
en particulier dans laquelle des écrous sont soudés sur la région respective formant patte afin de fournir des alésages filetés pour les vis.

4. Transmission selon la revendication 2 ou 3,
**caractérisée en ce que**
au niveau des parties de capot (1, 2) fabriquées en tôle sous forme de pièces pliées estampées, une partie cadre respective, soudée du côté intérieur de la partie de capot (1, 2) respective et à laquelle la première ou la deuxième partie de grille (3, 4) est fixée, en particulier au moyen de vis, fait saillie dans l'évidement,
en particulier dans laquelle des écrous sont soudés sur la partie cadre afin de fournir des alésages filetés pour les vis.

5. Transmission selon l'une quelconque des revendications 2 à 4,
**caractérisée en ce que**
l'évidement est recouvert radialement par la grille, en particulier par les deux parties de grille (3, 4),
en particulier de sorte que le flux d'air entrant axialement traverse la grille.

6. Transmission selon l'une quelconque des revendications précédentes, **caractérisée en ce que**
les deux parties de grille (3, 4) sont en contact le long de la première ligne de séparation ou présentent l'une par rapport à l'autre une distance inférieure à 5 mm.

7. Transmission selon l'une quelconque des revendications précédentes,
**caractérisée en ce que**
les deux parties de capot (1, 2) sont en contact le long de la deuxième ligne de séparation ou présentent l'une par rapport à l'autre une distance inférieure à 5 mm.

8. Transmission selon l'une quelconque des revendications précédentes,
**caractérisée en ce que**
le flux d'air requis par la roue de ventilateur (20) sort entre le carter (5) de la transmission et le capot, en particulier en étant dirigé de manière à s'écouler le long du carter (5) de la transmission.

9. Transmission selon l'une quelconque des revendications précédentes,
**caractérisée en ce que**
le capot présente une face frontale de forme polygonale irrégulière dans la direction circonférentielle,
la circonférence radialement extérieure de la face frontale du capot est en particulier de forme polygonale irrégulière.

10. Transmission selon la revendication 1,
**caractérisée en ce que**
les parties de capot (1, 2) et/ou les parties de grille (3, 4) sont respectivement fabriquées sous forme de pièces pliées estampées.

11. Transmission selon l'une quelconque des revendications précédentes,
**caractérisée en ce que**
une protection contre la mise en prise (31) agencée entre la partie de capot et le carter (5) de la transmission est fixée à chaque partie de capot (1, 2), en particulier à la paroi intérieure de chaque partie de capot (1, 2),
dans laquelle la protection contre la mise en prise (31) présente des orifices de grille traversants.

12. Transmission selon l'une quelconque des revendications précédentes,
**caractérisée en ce que**
chaque partie de capot (1, 2) présente des évidements radialement traversants qui sont réalisés sous forme de fente, de trou allongé ou d'ellipse, dans laquelle la plus longue extension respective de l'évidement respectif est orientée dans la direction axiale.

13. Transmission selon l'une quelconque des revendications précédentes,
**caractérisée en ce que**
chaque partie de grille (3, 4) présente une grille plane uniforme et/ou régulière constituée d'évidements, en particulier d'orifices de grille, en particulier hexagonaux, traversant axialement la partie de grille (3, 4) respective.
